# EUROPÄISCHE PATENTANMELDUNG

(11) **EP 3 603 847 A2**
(43) Veröffentlichungstag der Anmeldung: **05.02.2020**
(21) Anmeldenummer: 19189780.0
(22) Anmeldetag: 02.08.2019
(51) Int. Cl.: B22C 7/02, B22C 9/04, B29C 33/00, B29C 33/42, B29C 45/37, B22D 46/00, G06K 19/06

(54) **EINZELTEILRÜCKVERFOLGUNG VON FEINGUSSBAUTEILEN UND DAS BEREITSTELLEN VON MASCHINENLESBAREN CODES AUF FEINGUSSBAUTEILEN**

(30) Priorität: 03.08.2018 DE 102018118969
(71) Anmelder: Zollern GmbH & Co. KG, 72517 Sigmaringen-Laucherthal (DE)
(72) Erfinder: Siedersberger, Markus, 94491 Hengersberg (DE)
(74) Vertreter: SSM Sandmair

(57) **Zusammenfassung**

Verfahren zum Herstellen eines Gießprodukts mittels Feingießen, folgende Schritte umfassend: Bereitstellen eines Körpers aus einem niedrigschmelzendem Werkstoff, beispielsweise Wachs oder Kunststoff, wobei der Körper ein Eingießsystem und mindestens ein an dem Eingießsystem befestigtes Modell eines Bauteils aufweist, Umhüllen eines Körpers mit einer Gießform, wobei vor dem Umhüllen des Körpers auf den Körper ein dreidimensionaler Code (3) aufgebracht wird, der eine Vielzahl von höckerartigen Erhebungen (3a) aufweist.

## Beschreibung

Die Erfindung betrifft nach einem ersten Aspekt das Bereitstellen von maschinenlesbaren Codes auf Feingussbauteilen und nach einem zweiten Aspekt ein Verfahren zur Einzelteilrückverfolgung von Feingussbauteilen vom Auftragsstart beim Hersteller über die Anlieferung beim Kunden bis Ausfälle im Feld. Die ersten und zweiten Aspekte können miteinander kombiniert werden. Die Feingussbauteile können beispielsweise Turbinenräder, insbesondere für Turbolader oder Abgasturbolader, sein.

Es ist eine Aufgabe der Erfindung, Feingussbauteile mit Hilfe eindeutiger Codes rückverfolgbar zu machen und/oder solche Codes auf Feingussbauteilen vorzugsehen und/oder ein Verfahren zur Einzelteilrückverfolgung anzugeben.

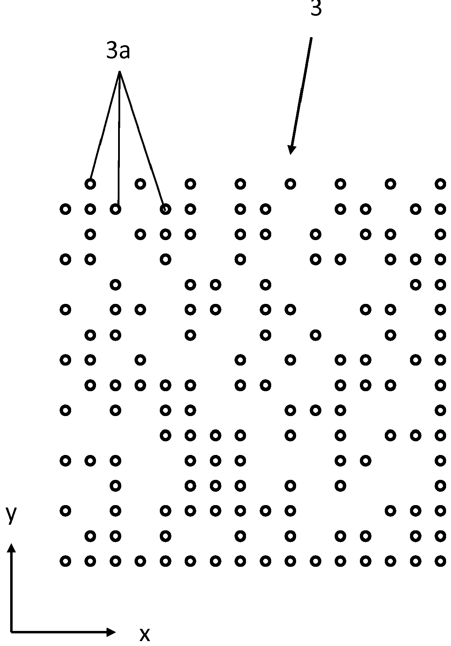

Die Aufgabe wird durch die Merkmale der unabhängigen Ansprüche gelöst. Vorteilhafte Weiterbildungen ergeben sich aus den abhängigen Ansprüchen, der Beschreibung und der Zeichnung.

Nach dem ersten Aspekt wird ein Körper (beispielsweise Gießeinheit oder Modelltraube) aus einem niedrigschmelzenden Werkstoff, beispielsweise Wachs oder Kunststoff bereitgestellt. Der Körper weist ein Eingießsystem (Stamm) und ein oder mehrere an dem Eingießsystem befestigte Modelle eines zu gießenden Bauteils auf. Beispielsweise können an dem Stamm eine Vielzahl derartiger Modelle befestigt werden. Bevor der Körper mit einer Gießform umhüllt wird, wird auf dem Körper, beispielweise auf dem Stamm oder/und auf dem Modell oder den Modellen, ein dreidimensionaler, insbesondere maschinenlesbarer Code aufgebracht, der eine Vielzahl von höckerartigen Erhebungen aufweist. Diese Erhebungen bzw. der Code wird beim Umhüllen des Körpers mit der Gießform als Negativform in der Gießform abgebildet. Beim späteren Gießen werden die höckerartigen Erhebungen bzw. der dreidimensionale Code auf der Oberfläche des Gießprodukts gebildet. Somit wird der dreidimensionale Code durch das Gießen am Gießprodukt bereitgestellt. Somit ist das Gießprodukt durch den Code eindeutig identifizierbar. Unter dem dreidimensionalen Code kann beispielsweise ein zweidimensionaler Code verstanden werden, der durch die höckerartigen Erhebungen dreidimensional ist. D.h. die höckerartigen Erhebungen bilden die dritte Dimension.

Zum Herstellen der Gießform wird der Körper aus niedrigschmelzendem Werkstoff und zumindest abschnittsweise der Keramiktrichter mit der Gießform umhüllt. Geeignete Werkstoffe für die Gießform sind aus dem technischen Gebiet des Feingusses bekannt. Beispielsweise kann die Gießform abwechselnd mehrere Schichten aus Keramik und Sand umfassen.

Nachdem der Körper umhüllt wurde, wird die Gießform gebrannt und der niedrigschmelzende Werkstoff wird aus der Gießform ausgeschmolzen. Anschließend wird der durch das Ausschmelzen entstandene, von der Gießform umgebene Hohlraum mit flüssigem Metall oder einer flüssigen Metalllegierung gefüllt. Nach dem Erstarren des Metalls oder der Metalllegierung wird die Gießform, einschließlich Keramiktrichter entfernt, wodurch das Gießprodukt erhalten wird, das den dreidimensionalen Code aufweist, der eine Vielzahl von höckerartigen Erhebungen umfasst. Da aufgrund des Entfernens der Gießform und somit auch des Keramiktrichters der Code auf dem Keramiktrichter - wenn er nicht bereits beim Brennen der Gießform zerstört wurde - nicht mehr vorhanden ist, kann das Gießprodukt über den beim Gießen entstandenen dreidimensionalen Code auf seiner Oberfläche eindeutig identifiziert werden.

In Weiterbildungen kann jede der höckerartigen Erhebungen in Form eines flüssigen Wachs- oder Kunststofftropfens auf die Oberfläche des Körpers aus dem niedrigschmelzenden Werkstoffs aufgebracht werden. Der Tropfen verfestigt sich nach dem Aufbringen und bildet dadurch die höckerartige Erhebung.

Beispielsweise werden die höckerartigen Erhebungen von einem Applikatorkopf aufgebracht, der zumindest eine Ausgabedüse aufweist, aus der der flüssige Wachs- oder Kunststofftropfen ausgegeben wird und insbesondere auf die Oberfläche des Körpers aufgebracht wird.

Der Applikatorkopf kann relativ zu dem Körper oder der Körper kann relativ zu dem Applikatorkopf positioniert werden, um die wenigstens eine Ausgabedüse über der Stelle oder dem Feld zu positionieren, in dem ein flüssiger Wachs- oder Kunststofftropfen aufgebracht werden soll.

Die Erfindung betrifft auch ein Gießprodukt, welches mittels Feingießen hergestellt ist, wobei das Gießprodukt einen dreidimensionalen Code aufweist, der eine Vielzahl von höckerartigen Erhebungen umfasst.

Der maschinenlesbare Code kann matrixartig angeordnet sein, insbesondere kann der Code ein DataMatrix-Code, ein QR-Code, ein Maxicode, ein Aztec-Code oder ein Punktcode sein.

In Weiterbildungen kann der Code sich mit einer Anzahl m-Feldern in einer x-Richtung und mit einer Anzahl n-Feldern in einer sich orthogonal zur x-Richtung erstreckenden y-Richtung erstrecken, wobei jedes der Felder entweder von einer höckerartigen Erhebung oder keiner höckerartigen Erhebung besetzt ist.

Beispielsweise kann in einer der beiden äußeren sich in x-Richtung erstreckenden Reihen jedes Feld eine höckerartige Erhebung aufweisen. In der anderen der beiden äußeren sich in x-Richtung erstreckenden Reihen kann nur jedes zweite Feld eine höckerartige Erhebung aufweisen. In einer der beiden äußeren sich in y-Richtung erstreckenden Reihen kann jedes Feld eine höckerartige Erhebung aufweisen und in der anderen der beiden äußeren sich in y-Richtung erstreckenden Reihen kann nur jedes zweite Feld eine höckerartige Erhebung aufweisen. Hierdurch sind für die Maschine eindeutig die Ausrichtung und die Dimension des Codes erkennbar, sodass der Code besonders gut maschinenlesbar ist. Insbesondere kann die Ecke, an der die Reihen, in denen nur jedes zweite Feld eine höckerartige Erhebung aufweist, zusammentreffen, eine höckerartige Erhebung aufweisen, wenn die Anzahl m und/oder n ungerade ist, und keine höckerartige Erhebung aufweisen, wenn die Anzahl m und n gerade ist.

Insbesondere können die vom Gießprodukt oder dem Körper aus niedrigschmelzendem Werkstoff abragenden Enden der höckerartigen Erhebungen im Wesentlichen kugelabschnittsförmig sein.

Nach dem zweiten Aspekt geht die Erfindung von einem Verfahren für eine Einzelteilrückverfolgung von Feingussbauteilen aus. Ein Eingießsystem wird aus einem niedrigschmelzenden Werkstoff, beispielsweise Wachs oder Kunststoff, bereitgestellt. An dessen Oberfläche ist oder wird ein Informationsmittel in Form eines dreidimensionalen, eine Vielzahl höckerartige Erhebungen aufweisenden Codes aufgebracht, insbesondere nach dem ersten Aspekt und/oder dessen Weiterbildungen. Der dreidimensionale Code beinhaltet individuelle Eingießsystemidentifikationsdaten zur eindeutigen Identifizierung des jedes individuellen Eingießsystems. Die Eingießsystemidentifikationsdaten werden in einem elektronischen Datenverarbeitungssystem, insbesondere in einer Datenbank, gespeichert.

Es werden Modelle für Bauteile aus einem niedrigschmelzenden Material, beispielsweise Wachs oder Kunststoff, in einer Spritzgussform hergestellt. Jedes dieser Modelle wird in einem dafür vorgesehenen Fach abgelegt, wobei jedes Fach mit einem separaten Identifikationsmittel, beispielsweise einem optischen-lesbaren Code, RFID oder dergleichen, gekennzeichnet ist. Hierdurch kann bereits nachvollzogen werden, aus welchem Fach ein Modell für ein späteres Weiterverarbeiten entnommen wurde. Über das Identifikationsmittel ist jedes Fach und somit das darin enthaltene Modell eindeutig identifizierbar, ohne dass es eines auf dem Modell angebrachten Identifikationsmittels zwingend bedarf.

Es wird ein Eingießsystem (Stamm) aus einem niedrigschmelzenden Werkstoff, beispielsweise Wachs oder Kunststoff, bereitgestellt, an dem ein oder mehrere Modelle aus einem niedrigschmelzenden Werkstoff, beispielsweise Wachs oder Kunststoff, eines zu gießenden Bauteils befestigt, insbesondere angeklebt oder angeschweißt werden, werden, wodurch ein Körper, beispielweise Gießeinheit oder Traube, entsteht. Vor, während oder nach dem Anbringen des einen der der mehreren Modelle wird auf der Oberfläche des Eingießsystems ein Informationsmittel in der Gestalt eines dreidimensionalen Codes aufgebracht, insbesondere wie zum ersten Aspekt beschrieben. Ferner können das oder die Modelle über ihre Identifikationsmittel dem Eingießsystem, an die sie befestigt sind oder werden, zugeordnet werden.

Das auf der Oberfläche des Eingießsystems aufgebrachte Informationsmittel beinhaltet individuelle Eingießsystemidentifikationsdaten, beispielsweise eine laufende Nummer, zur eindeutigen Identifizierung dieses Eingießsystems. Die Eingießsystemidentifikationsdaten werden in einem elektronischen Datenverarbeitungssystem, insbesondere in einer Datenbank, gespeichert. Durch die für jedes Eingießsystem individuell vergebenen Eingießsystemidentifikationsdaten kann jedes Eingießsystem eindeutig identifiziert werden.

An das Eingießsystem können mehrere, aus einem niedrigschmelzenden Werkstoff, beispielsweise Wachs oder Kunststoff, gefertigte Modelle der herzustellenden Bauteile zur Bildung einer Gießeinheit angebracht werden. Dafür wird jedes der Modelle insbesondere maschinell, beispielsweise mit einem Greifarm, aus einem ihm zugeordneten Fach entnommen, das mit einem Fachidentifikationsmittel versehen ist, welches individuelle Fachidentifikationsdaten zur eindeutigen Identifizierung des Fachs, aus dem das Modell entnommen wird, beinhaltet. Das Fachinformationsmittel des jeweiligen Fachs kann ein RFID-Chip (radio frequency identification) sein, dessen Fachinformationsdaten beispielsweise eine laufende Nummer enthalten.

Jedes der Modelle wird durch maschinelles Einlesen der Fachidentifikationsdaten des Fachidentifikationsmittels seines Fachs identifiziert, wobei in dem elektronischen Datenverarbeitungssystem für jedes Modell Daten gespeichert werden, die beschreiben, aus welchem Fach das Modell entnommen wurde und an welchem Eingießsystem und an welcher Stelle dieses Eingießsystems das Modell befestigt wird. Dadurch kann vorteilhaft erreicht werden, dass das gespritzte Wachsmodell selbst nicht mit einer Kennzeichnung versehen werden braucht, um es eindeutig identifizieren zu können. Vielmehr erfolgt die Identifizierung über das Fach, aus dem das Modell entnommen wird.

Die Herstellung der Gießform und das Gießen erfolgen in an sich bekannter Weise, insbesondere durch Umhüllen der Gießeinheit mit einer Gießform, Ausschmelzen der aus niedrigschmelzendem Werkstoff hergestellten Gießeinheit aus der Gießform, Befüllen des durch das Ausschmelzen entstandenen, von der Gießform umgebenen Hohlraums mit flüssigem Metall oder einer flüssigen Metalllegierung, Entfernen der Gießform nach dem Erstarren des Metalls oder der Metalllegierung, wodurch ein Gießprodukt erhalten wird, das den eine Vielzahl von höckerartigen Erhebungen (3a) aufweisenden dreidimensionalen Code (3) aufweist. Da spätestens beim Entfernen der Gießform, einschließlich Keramiktrichter, daran angebrachte Kennzeichnungsmittel zerstört werden, wenn sie nicht schon beim Erhitzen der Gießform zerstört wurden, ist eine eindeutige Identifizierung des Gießprodukts über den dreidimensionalen Code, der auf dem Gießprodukt, insbesondere dessen Eingießsystem, abgebildet ist, möglich.

Dementsprechend umfasst das Verfahren das Identifizieren des Gießprodukts durch maschinelles Einlesen des dreidimensionalen Codes in das elektronische Datenverarbeitungssystem und Identifizieren jedes Bauteils durch Abrufen der Position des ihm zu Grunde liegenden Modells am Eingießsystem aus dem elektronischen Datenverarbeitungssystem. Durch die in dem elektronischen Datenverarbeitungssystem gespeicherte Position jedes Bauteils bzw. des zugrunde liegenden Modells an dem über den dreidimensionalen Code eindeutig identifizierbaren Eingießsystem, kann jedes Bauteil dem ihm zugrunde liegenden Modell eindeutig zugeordnet werden.

Ferner eine individuelle optisch lesbare, insbesondere maschinenlesbare, Kennzeichnung auf jedem Bauteil angebracht, beispielsweise durch Aufspritzen oder Aufdrucken, wobei die optisch lesbare Kennzeichnung erste Bauteilidentifikationsdaten zur eindeutigen Identifikation jedes Bauteils beinhaltet. Danach wird jedes Bauteil von dem übrigen Gießprodukt bzw. dem Stamm (vormals Eingießsystem) abgetrennt, wobei in dem elektronischen Datenverarbeitungssystem von jedem Modell die Bauteilidentifikationsdaten gespeichert werden. Über die ersten Bauteilidentifikationsdaten die Historie jedes Bauteils aufgerufen werden, d.h. jedes Bauteil rückverfolgt werden, durch Einlesen oder Eingeben der Bauteilidentifikationsdaten in das elektronische Datenverarbeitungssystem. Beispielsweise das elektronische Datenverarbeitungssystem konfiguriert sein, durch Einlesen oder Eingeben der Bauteilidentifikationsdaten die für das zugrunde liegende Modell gespeicherten Daten, die beschreiben, aus welchem Fach das Modell entnommen wurde und an welchem Eingießsystem und an welcher Stelle dieses Eingießsystems das Modell befestigt wurde, insbesondere die Historie, jedes Bauteils auszugeben.

Die ersten Bauteilidentifikationsdaten können eine laufende Nummer enthalten oder sein, die einmalig vergeben wird, wodurch jedes Bauteil anhand der fortlaufenden Nummer identifizierbar ist. Optional kann die laufende Nummer der ersten Bauteilidentifikationsdaten die laufende Nummer der Fachinformationsdaten sein.

Ferner kann das Verfahren umfassen, dass je Eingießsystem ein Keramiktrichter bereitgestellt wird, auf den ein optisch-maschinenlesbares (Trichter-)Identifikationsmittel, insbesondere mittels Laserbearbeitung, angebracht ist oder wird. Das Identifikationsmittel kann Trichteridentifikationsdaten zur eindeutigen Identifizierung dieses Keramiktrichters beinhalten, wobei die Trichteridentifikationsdaten in dem elektronischen Datenverarbeitungssystem gespeichert werden. Der Keramiktrichter kann an dem Eingießsystem befestigt werden, noch bevor der dreidimensionale Code auf das Eingießsystem aufgebracht wird, beispielsweise beim Gießen des Eingießsystems, indem der Keramiktrichter in die Gießform des Eingießsystems eingelegt wird, oder nach dem Gießen des Eingießsystems, indem der Keramiktrichter an dem Eingießsystem befestigt, insbesondere angeklebt wird. Die Gießform kann anhand des auf dem Trichter aufgebrachten Identifikationsmittels vorteilhaft von der Erzeugung der Keramikschale bis zum Abtrennen der Bauteile durch Einlesen in das elektronische Datenverarbeitungssystem gegenüber dem Fertigungsauftrag identifiziert werden.

Die individuellen Eingießidentifikationsdaten zur eindeutigen Identifizierung des jeweiligen Eingießsystems können beispielsweise eine laufende Nummer enthalten, mit der das Eingießsystem bzw. jedes individuelle Eingießsystem gegenüber den anderen Eingießsystem, beispielsweise des gleichen oder eines anderen Typs, eindeutig identifizierbar ist. Vorteilhaft kann das Identifikationsmittel des Keramiktrichters dieselben Daten, nämlich dieselbe laufende Nummer enthalten, wie das Eingießsystem an der der Keramiktrichter befestigt ist.

Nach dem Abtrennen kann das Bauteil optional materialabhebend bearbeitet werden und danach das Bauteil hinsichtlich der für das Bauteil festgelegten Qualitätskriterien, insbesondere auf Maßhaltigkeit, beispielsweise maschinell geprüft werden. Eine Kennzeichnung wird auf die Oberfläche des Bauteils genadelt, wenn es den Qualitätskriterien genügt. Genügt es den Qualitätskriterien nicht, kann es entweder nachbearbeitet oder als Ausschuss verworfen werden. Die genadelte Kennzeichnung beinhaltet zweite Bauteilidentifikationsdaten zur eindeutigen Identifikation jedes Bauteils, wobei die zweiten Bauteilidentifikationsdaten in dem elektronischen Datenverarbeitungssystem gespeichert werden. Dadurch kann durch Eingabe oder Einlesen der zweiten Bauteilidentifikationsdaten in das elektronische Datenverarbeitungssystem das Bauteil zu einem späteren Zeitpunkt identifiziert werden und dessen Historie jedes Bauteils, beispielsweise vom Erstellen des Wachsmodells an, aus dem elektronischen Datenverarbeitungssystem abgerufen werden.

Die zweiten Bauteilidentifikationsdaten können eine laufende Nummer enthalten, welche die laufende Nummer der ersten Bauteilidentifikationsdaten und/oder die laufende Nummer der Fachidentifikationsdaten ist oder enthält.

Ferner kann die Prüfung aller Kundenanforderungen über automatische Maschinen erfolgen. Eine kundenspezifische Kennzeichnung kann auf die Oberfläche des Bauteils angebracht werden, wenn es den Kundenanforderungen genügt. Die kundenspezifische Kennzeichnung kann dritte Bauteilidentifikationsdaten zur eindeutigen Identifikation jedes Bauteils beinhalten, wobei die dritten Bauteilidentifikationsdaten in dem elektronischen Datenverarbeitungssystem gespeichert werden. Durch Eingabe oder Einlesen der dritten Bauteilidentifikationsdaten in das elektronische Datenverarbeitungssystem kann das Bauteil zu einem späteren Zeitpunkt identifiziert und dessen Historie vom Erstellen des Wachsmodells an aus dem elektronischen Datenverarbeitungssystem abgerufen werden.

Durch die individuelle Positionierung der Modelle am Eingießsystem in Bezug auf die Stelle, an der der dreidimensionale Code aufgebracht ist oder wird, kann für jedes einzelne Bauteil identifiziert werden, aus welchem Fach das dazugehörige Modell entnommen wurde bzw. auf welches Modell jedes einzelne Bauteil zurückgeht. Bevor oder nachdem das Bauteil vom Stamm (ehemals Eingießsystem) abgetrennt wird oder wurde, erfolgt das Aufbringen der Kennzeichnung, die erste Bauteilidentifikationsdaten zur eindeutigen Identifikation jedes Bauteils beinhaltet, insbesondere mit einer laufenden Nummer oder einem individuellen, für jedes Bauteil einmalig vergebenen Code, wodurch jedes Bauteil eindeutig identifizierbar ist. Dies kann beispielsweise mit einer individuellen, für jedes Bauteil einmalig vergebenen Seriennummer erfolgen. Die Kennzeichnung kann beispielsweise aufgespritzt oder aufgedruckt werden. Die Kennzeichnung kann beispielsweise vorübergehend sein, bis sie durch eine andere Kennzeichnung ersetzt wird.

### Beispiel für jeweils als Turbinenrad (TR) ausgestaltete Bauteile:

Das gespritzte Wachs-TR muss nicht mit einer eindeutigen laufenden Nummer über das Werkzeug gekennzeichnet werden, sondern die Info wird in einem RFID (Befestigung am Fach bzw. Tablar) gespeichert.

Der Wachsstamm wird vor dem Ankleben der Wachs-TR mit einem erhabenen DMC (Datamatrix-Code) gekennzeichnet und erhält eine eindeutige, laufende Nummer. Dieser DMC (ohne Erhebungen) wird als zweidimensionaler Code auch auf den Keramiktrichter aufgebracht. Statt den Erhebungen sind die einzelnen Felder des DMC hell oder dunkel, wie es üblicherweise bei DMC der Fall ist.

Eine Klebeanlage verheiratet nun beide Informationen miteinander und speichert die erzeugten Informationen ab. Dadurch wird eindeutig festgelegt, welche Bäume mit laufenden Nummern zum Fertigungsauftrag (TR-Typ bezogen) gehören und welche laufenden TR an folgender Position sind.

Von der Erzeugung der Keramikschale bis zum Abtrennen der Metall-TR vom Metallstamm kann mit dem Keramiktrichter gegenüber dem Fertigungsauftrag (TR-Typ bezogen) identifiziert und gebucht werden.

Bevor das Metall-TR vom Metall-TR abgetrennt wird, erfolgt zuerst die Kennzeichnung jedes Metall-TR mit der laufenden Nummer.

Nachdem das Metall-TR gereinigt wurde, wird dieses auf Fertigmaß geschliffen und mit einer Messmaschine überprüft. Liegt dieses Maß innerhalb der Toleranz, wird die laufende Nummer in die Nase genadelt und liegt somit unzerstörbar vor. Jetzt kann bis zur Auslieferung jedes Metall-Bauteil mit der aufgenadelten Nummer individuell gebucht werden.

Bevor das Metall-TR an den Kunden geliefert wird, erfolgt die Prüfung aller Kundenanforderungen über automatische Maschinen. Entspricht das TR den Kundenanforderungen wird der Kunden-DMC am Radrücken aufgebracht und in die diesbezügliche Verpackung gelegt.

Das Feingussbauteil muss nicht mit einer eindeutigen laufenden Nummer (DMC-Bestandteil) im Werkzeuge gefertigt werden, um dieses rückverfolgen zu können. Der Vorteil liegt darin, dass die laufende Nummer in einem DMC erst vor dem Abtrennen der Bauteil aufgebracht wird, wobei diese Kennzeichnung über das Nadeln temperaturbeständig ist. Dadurch wird die Information dem Bauteil eindeutig zugewiesen und kann im Feld identifiziert werden.

Zudem kann mit der Kennzeichnungseinheit (DMC am Stamm) ein individueller, erhabener Code in wenigen Sekunden an jedem Bauteil erzeugt wobei diese Informationen von einem elektronischen Datenverarbeitungssystem verwaltet wird. Weder ein 3D-Drucker noch ein Inkjet-Drucker können diesen DMC bisher erzeugen.

Die Erfindung wurde anhand mehrerer Aspekte und vorteilhafter Weiterbildungen sowie anhand eines Beispiels beschrieben. Im Folgenden werden ein dreidimensionaler Code und ein Applikatorkopf für dessen Aufbringung anhand einer Zeichnung beschrieben. Die dabei offenbarten Merkmale bilden die Erfindung vorteilhaft weiter.

In der Zeichnung wird ein dreidimensionaler, maschinenlesbarer Code gezeigt.

Der in der Zeichnung gezeigte Code ist ein sogenannter DataMatrix-Code. Der Code erstreckt sich mit einer Anzahl von m Feldern in einer x-Richtung und mit einer Anzahl n Feldern in einer y-Richtung. Im gezeigten Beispiel gilt: m = 16, n = 16. Jedes der Felder ist entweder von einer höckerartigen Erhebung 3a oder keiner höckerartigen Erhebung 3a besetzt. Die x-Richtung und die y-Richtung sind senkrecht zueinander angeordnet. Eine der beiden äußeren sich in x-Richtung erstreckenden Reihen, in diesem Beispiel die Reihe, die den rechten Rand des Codes 3 bildet, weist jedes Feld eine höckerartige Erhebung 3a auf. In der anderen der beiden äußeren sich in x-Richtung erstreckenden Reihen, in diesem Beispiel die Reihe, die den linken Rand des Codes 3 bildet, weist nur jedes zweite Feld eine höckerartige Erhebung auf. In einer der beiden äußeren sich in y-Richtung erstreckenden Reihen, in diesem Beispiel die Reihe, die den unteren Rand des Codes 3 bildet, weist jedes Feld eine höckerartige Erhebung 3a auf. Die andere der beiden äußeren sich in y-Richtung erstreckenden Reihen, in diesem Beispiel die Reihe, die den oberen Rand des Codes 3 bildet, weist nur jedes zweite Feld eine höckerartige Erhebung 3a auf. Die Anzahl m und n ist jeweils geradzahlig. Somit weist die Ecke, an der die Reihen, in denen nur jedes zweite Feld eine höckerartige Erhebung aufweist, zusammentreffen, keine höckerartige Erhebung auf.

Ein Applikatorkopf (nicht gezeigt) ermöglicht es, Tropfen eines niedrigschmelzenden Werkstoffs auf den Körper aus dem niedrigschmelzenden Werkstoff zur Bildung der höckerartigen Erhebungen aufzubringen. Der Applikatorkopf kann eine Vielzahl Düsen aufweisen, welche den Code 3 auf einmal aufbringen können. Alternativ kann der Applikatorkopf eine einzelne Düse aufweisen, die für jede höckerartige Erhebung 3a in Bezug auf den Körper neu positioniert wird. Weiter alternativ kann der Applikatorkopf mehrere Düsen aufweisen, beispielsweise um in x- und/oder y-Richtung mehrere höckerartige Erhebungen auf einmal aufzubringen, wobei der Applikatorkopf zur vollständigen Aufbringung des Codes 3 mehrfach positioniert und mehrfach höckerartige Erhebungen 3a aufgebracht werden müssen.

## Patentansprüche

1. Verfahren zum Herstellen eines Gießprodukts mittels Feingießen, folgende Schritte umfassend:
- Bereitstellen eines Körpers aus einem niedrigschmelzendem Werkstoff, beispielsweise Wachs oder Kunststoff, wobei der Körper ein Eingießsystem und mindestens ein an dem Eingießsystem befestigtes Modell eines Bauteils aufweist,
- Umhüllen eines Körpers mit einer Gießform,
**dadurch gekennzeichnet, dass**
- vor dem Umhüllen des Körpers auf den Körper ein dreidimensionaler Code (3) aufgebracht wird, der eine Vielzahl von höckerartigen Erhebungen (3a) aufweist.

2. Verfahren nach dem vorhergehenden Anspruch, **dadurch gekennzeichnet, dass** jede der höckerartigen Erhebungen (3a) in Form eines flüssigen Wachs- oder Kunststofftropfens auf die Oberfläche des Körpers aufgebracht wird, der sich nach dem Aufbringen verfestigt, wobei bevorzugt ist, dass die höckerartige Erhebung (3a) von einem Applikatorkopf aufgebracht werden, der zumindest eine Ausgabedüse aufweist, aus der der flüssige Wachs- oder Kunststofftropfen ausgegeben wird.

3. Verfahren nach dem vorhergehenden Anspruch, **dadurch gekennzeichnet, dass** der Applikatorkopf relativ zudem Körper oder der Körper relativ zu dem Applikatorkopf positioniert wird, um die wenigstens eine Ausgabedüse ober dem Feld zu positionieren, in dem ein flüssiger Wachs- oder Kunststofftropfen aufgebracht werden soll.

4. Verfahren nach einem der vorhergehenden Ansprüche, das ferner die folgenden Schritte umfasst:
- Ausschmelzen des niedrigschmelzenden Werkstoffs aus der Gießform
- Befüllen des durch das Ausschmelzen entstandenen, von der Gießform umgebenen Hohlraums mit flüssigem Metall oder einer flüssigen Metalllegierung
- Entfernen der Gießform nach dem Erstarren des Metalls oder der Metalllegierung, wodurch ein Gießprodukt erhalten wird, das einen dreidimensionalen Code (3) aufweist, der eine Vielzahl von höckerartigen Erhebungen (3a) aufweist.

5. Gießprodukt, welches mittels Feingießen hergestellt ist, wobei das Gießprodukt einen dreidimensionalen Code (3) aufweist, der eine Vielzahl von höckerartigen Erhebungen (3a) umfasst.

6. Verfahren nach einem der Ansprüche 1 bis 4 oder Gießprodukt nach Anspruch 5, **dadurch gekennzeichnet, dass** der Code (3) matrixartig, insbesondere ein DataMatrix-Code, ein QR-Code, ein MaxiCode, ein Aztec-Code oder ein Punktcode, ist.

7. Verfahren nach einem der Ansprüche 1 bis 4 und 6 oder Gießprodukt nach Anspruch 5 oder 6, **dadurch gekennzeichnet, dass** der Code (3) sich mit einer Anzahl m Feldern in einer x-Richtung und einer Anzahl n Feldern in einer y-Richtung erstreckt, wobei jedes der Felder entweder von einer höckerartigen Erhebung (3a) oder keiner höckerartigen Erhebung besetzt ist, wobei bevorzugt ist, dass die x-Richtung und die y-Richtung senkrecht zueinander sind.

8. Verfahren oder Gießprodukt nach Anspruch 7, **dadurch gekennzeichnet, dass** in einer der beiden äußeren sich in x-Richtung erstreckenden Reihen jedes Feld eine höckerartige Erhebung (3a) aufweist und in der anderen der beiden äußeren sich in x-Richtung erstreckenden Reihen nur jedes zweite Feld eine höckerartige Erhebung (3a) aufweist und in einer der beiden äußeren sich in y-Richtung erstreckenden Reihen jedes Feld eine höckerartige Erhebung (3a) aufweist und in der anderen der beiden äußeren sich in y-Richtung erstreckenden Reihen nur jedes zweite Feld eine höckerartige Erhebung (3a) aufweist, wobei bevorzugt ist, dass die Ecke, an der die Reihen, in denen nur jedes zweite Feld eine höckerartige Erhebung (3a) aufweist, zusammentreffen, eine höckerartige Erhebung (3a) aufweist, wenn die Anzahl m und/oder n ungerade ist, und keine höckerartige Erhebung (3a) aufweist, wenn die Anzahl m und n gerade ist.

9. Verfahren nach einem der Ansprüche 1 bis 4 und 6 bis 8 oder Gießprodukt nach einem der Ansprüche 5 bis 8, **dadurch gekennzeichnet, dass** die abragenden Enden der höckerartigen Erhebungen (3a) im Wesentlichen kugelabschnittsförmig sind.

10. Verfahren zur Einzelteilrückverfolgung von im Feingussverfahren hergestellten Bauteilen, wobei
- ein Eingießsystem aus einem niedrigschmelzenden Werkstoff, beispielsweise Wachs oder Kunststoff, bereitgestellt wird, an dessen Oberfläche ein Informationsmittel in Form eines dreidimensionalen, eine Vielzahl höckerartige Erhebungen aufweisenden Codes, welcher individuelle Eingießsystemidentifikationsdaten zur eindeutigen Identifizierung dieses Eingießsystems beinhaltet, aufgebracht wird oder ist, wobei die Eingießsystemidentifikationsdaten in einem elektronischen Datenverarbeitungssystem, insbesondere in einer Datenbank, gespeichert werden;
- an das Eingießsystem mehrere, aus einem niedrigschmelzenden Werkstoff gefertigte Modelle der herzustellenden Bauteile zur Bildung einer Gießeinheit angebracht werden;
- jedes der Modelle aus einem ihm zugeordneten Fach entnommen wird, das mit einem Fachidentifikationsmittel versehen ist, welches individuelle Fachidentifikationsdaten zur eindeutigen Identifizierung des Fachs, aus dem das Modell entnommen wird, beinhaltet;
- jedes der Modelle durch maschinelles Einlesen der Fachidentifikationsdaten des Fachidentifikationsmittels seines Fachs identifiziert wird, wobei in dem elektronischen Datenverarbeitungssystem für jedes Modell Daten gespeichert werden, die beschreiben, aus welchem Fach das Modell entnommen wurde und an welchem Eingießsystem und an welcher Stelle dieses Eingießsystems das Modell befestigt wird, ferner die Schritte umfassend:
- Umhüllen der Gießeinheit mit einer Gießform,
- Ausschmelzen der aus niedrigschmelzendem Werkstoff hergestellten Gießeinheit aus der Gießform,
- Befüllen des durch das Ausschmelzen entstandenen, von der Gießform umgebenen Hohlraums mit flüssigem Metall oder einer flüssigen Metalllegierung,
- Entfernen der Gießform nach dem Erstarren des Metalls oder der Metalllegierung, wodurch ein Gießprodukt erhalten wird, das den eine Vielzahl von höckerartigen Erhebungen (3a) aufweisenden dreidimensionalen Code (3) aufweist,
- Identifizieren des Gießprodukts durch maschinelles Einlesen des dreidimensionalen Codes in das elektronische Datenverarbeitungssystem und Identifizieren jedes Bauteils durch Abrufen der Position des ihm zu Grunde liegenden Modells am Eingießsystem aus dem elektronischen Datenverarbeitungssystem,
- Anbringen einer individuellen optisch lesbaren, insbesondere maschinenlesbaren, Kennzeichnung auf jedem Bauteil, wobei die optisch lesbare Kennzeichnung erste Bauteilidentifikationsdaten zur eindeutigen Identifikation jedes Bauteils beinhaltet, und danach Abtrennen jedes Bauteils von dem übrigen Gießprodukt, wobei in dem elektronischen Datenverarbeitungssystem von jedem Modell die Bauteilidentifikationsdaten gespeichert werden.

11. Verfahren nach Anspruch 10, wobei das elektronische Datenverarbeitungssystem konfiguriert ist, durch Einlesen oder Eingeben der Bauteilidentifikationsdaten die für das zugrunde liegende Modell gespeicherten Daten, die beschreiben, aus welchem Fach das Modell entnommen wurde und an welchem Eingießsystem und an welcher Stelle dieses Eingießsystems das Modell befestigt wurde, auszugeben.

12. Verfahren nach einem der Ansprüche 10 oder 11, wobei
- das Fachinformationsmittel des jeweiligen Fachs ein RFID-Chip ist, dessen Fachinformationsdaten beispielsweise eine laufende Nummer enthalten, und/oder
- die ersten Bauteilidentifikationsdaten eine laufende Nummer enthalten, und/oder
- wobei die laufende Nummer der ersten Bauteilidentifikationsdaten die laufende Nummer der Fachinformationsdaten ist.

13. Verfahren nach einem der Ansprüche 10 bis 12, wobei je Eingießsystem ein Keramiktrichter bereitgestellt wird, auf den ein optisch-maschinenlesbares Identifikationsmittel, insbesondere mittels Laserbearbeitung, angebracht ist oder wird, das Trichteridentifikationsdaten zur eindeutigen Identifizierung dieses Keramiktrichters beinhaltet, wobei die Trichteridentifikationsdaten in dem elektronischen Datenverarbeitungssystem gespeichert werden, wobei der Keramiktrichter an dem Eingießsystem befestigt wird, noch bevor der dreidimensionale Code auf das Eingießsystem aufgebracht wird, wobei insbesondere bewirkt wird, dass die Gießform anhand des auf dem Trichter aufgebrachten Identifikationsmittels von der Erzeugung der Keramikschale bis zum Abtrennen der Bauteile durch Einlesen in das elektronische Datenverarbeitungssystem gegenüber dem Fertigungsauftrag identifiziert werden kann, wobei bevorzugt ist, dass die individuellen Eingießidentifikationsdaten zur eindeutigen Identifizierung des jeweiligen Eingießsystems eine laufende Nummer enthält, mit der es gegenüber den anderen Eingießsystem eindeutig identifizierbar ist, wobei das Identifikationsmittel des Keramiktrichters dieselben Daten, nämlich dieselbe laufende Nummer enthält, wie das Eingießsystem an der der Keramiktrichter befestigt ist.

14. Verfahren nach einem der Ansprüche 10 bis 13, wobei nach dem Abtrennen das Bauteil materialabhebend bearbeitet wird und danach das Bauteil hinsichtlich der für das Bauteil festgelegten Qualitätskriterien, insbesondere auf Maßhaltigkeit, beispielsweise maschinell geprüft wird, wobei eine Kennzeichnung auf die Oberfläche des Bauteils genadelt wird, wenn es den Qualitätskriterien genügt, wobei die genadelte Kennzeichnung zweite Bauteilidentifikationsdaten zur eindeutigen Identifikation jedes Bauteils beinhaltet, wobei die zweiten Bauteilidentifikationsdaten in dem elektronischen Datenverarbeitungssystem gespeichert werden, wobei durch Eingabe oder Einlesen der zweiten Bauteilidentifikationsdaten in das elektronische Datenverarbeitungssystem das Bauteil zu einem späteren Zeitpunkt identifizierbar und dessen Historie vom Erstellen des Wachsmodells an aus dem elektronischen Datenverarbeitungssystem abrufbar ist, wobei bevorzugt ist, dass die zweiten Bauteilidentifikationsdaten eine laufende Nummer enthalten, welche die laufende Nummer der ersten Bauteilidentifikationsdaten ist oder enthält.

15. Verfahren nach einem der Ansprüche 10 bis 14, wobei die Prüfung aller Kundenanforderungen über automatische Maschinen erfolgt, wobei eine kundenspezifische Kennzeichnung auf die Oberfläche des Bauteils angebracht wird, wenn es den Kundenanforderungen genügt, wobei die kundenspezifische Kennzeichnung dritte Bauteilidentifikationsdaten zur eindeutigen Identifikation jedes Bauteils beinhaltet, wobei die dritten Bauteilidentifikationsdaten in dem elektronischen Datenverarbeitungssystem gespeichert werden, wobei durch Eingabe oder Einlesen der dritten Bauteilidentifikationsdaten in das elektronische Datenverarbeitungssystem das Bauteil zu einem späteren Zeitpunkt identifizierbar und dessen Historie vom Erstellen des Wachsmodells an aus dem elektronischen Datenverarbeitungssystem abrufbar ist.
